# EUROPÄISCHE PATENTSCHRIFT

(11) **EP 0 350 639 B1**
(45) Veröffentlichungstag und Bekanntmachung des Hinweises auf die Patenterteilung: **15.12.1993**
(21) Anmeldenummer: 89110775.7
(22) Anmeldetag: 14.06.1989
(51) Int. Cl.: H02H 9/02

(54) **Vorrichtung zur Begrenzung des Eingangsstromes eines Speisegerätes**
Device for limiting the input current of a power supply
Dispositif pour limiter le courant d'entrée d'un appareil d'alimentation

(30) Priorität: 12.07.1988 DE 3823581
(43) Veröffentlichungstag der Anmeldung: 17.01.1990
(73) Patentinhaber: ASEA BROWN BOVERI AG, 5400 Baden (CH)
(72) Erfinder: Hänsli, Markus, CH-4658 Däniken (CH); Schilling, Robert, CH-5443 Niederrohrdorf (CH)

(56) Entgegenhaltungen:
- EP-A- 0 122 492
- EP-A- 0 272 514
- DE-A- 3 122 835
- DE-B- 2 348 524
- US-A- 3 935 511
- US-A- 4 233 557

## Beschreibung

### TECHNISCHES GEBIET

Bei der Erfindung wird ausgegangen von einer Vorrichtung nach dem einleitenden Teil von Patentanspruch 1.

### STAND DER TECHNIK

Hierbei nimmt die Erfindung Bezug auf einen Stand der Technik von Strombegrenzungsvorrichtungen, wie er aus DE-A-3 122 835 bekannt ist. Die bekannte Vorrichtung dient der Begrenzung von Eingangsströmen, wie insbesondere eines Stromstosses, welcher beim Kurzschliessen eines zwischen einer gleichgerichteten Wechselspannungsquelle und einem Ladekondensator angeordneten Strombegrenzungswiderstandes entsteht. Das Kurzschliessen des Strombegrenzungswiderstandes erfolgt nach einer definierten Verzögerungszeit mittels eines Null-Spannungs-Schalters zu einem Zeitpunkt, an dem die Wechselspannung den Wert der am Ladekondensator aufgebauten Gegenspannung erreicht hat. Bei schnellem Absinken der Wechselspannung veranlasst ein die Spannung am Ladekondensator überwachender Kompensator das Sperren des Null-Spannungs-Schalters.

Bei einem in US-A-3,935,511 beschriebenen Speisegerät begrenzt ein PTC-Widerstand beim Einschalten den von einer gleichgerichteten Wechselstromquelle an einen Ladekondensator fliessenden Strom. Sobald der Ladekondensator auf eine vorgegebene Spannung aufgeladen ist, wird der PTC-Widerstand kurzgeschlossen. Sinkt die Spannung des gleichgerichteten Wechselstromes unter einen vorgegebenen Wert ab, wird ein den PTC-Widerstand kurzschliessendes Schaltelement geöffnet.

Eine in EP-A-0 272 514 angegebene Schaltungsanordnung zur Einschaltstrombegrenzung weist einen Feldeffekttransistor auf, dessen Gate-Source-Strecke bei Überstrom durch die Kollektor-Emitter-Strecke eines bipolaren Transistors kurzgeschlossen wird.

### KURZE DARSTELLUNG DER ERFINDUNG

Die Erfindung, wie sie Patentanspruch 1 angegeben ist, löst die Aufgabe, eine Vorrichtung zur Begrenzung des Einschaltstromes eines Speisegerätes anzugeben, welches in einfacher und kostengünstiger Weise ein rasches und weitgehend verlustfreies Begrenzen des Eingangsstromes ermöglicht.

Bei der erfindungsgemässen Strombegrenzungsvorrichtung kann das den Ladewiderstand kurzschliessende Schaltelement schon beim Absinken der Eingangsspannung praktisch verzögerungsfrei geöffnet werden. Hierdurch ist eine besonders rasche und sichere Begrenzung unerwünscht auftretender Stromstösse gewährleistet.

### KURZE BESCHREIBUNG DER ERFINDUNG

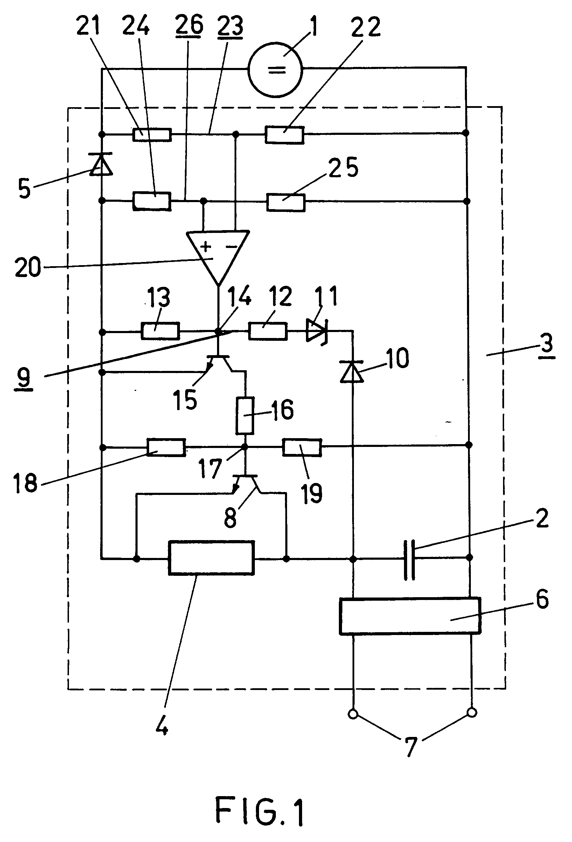

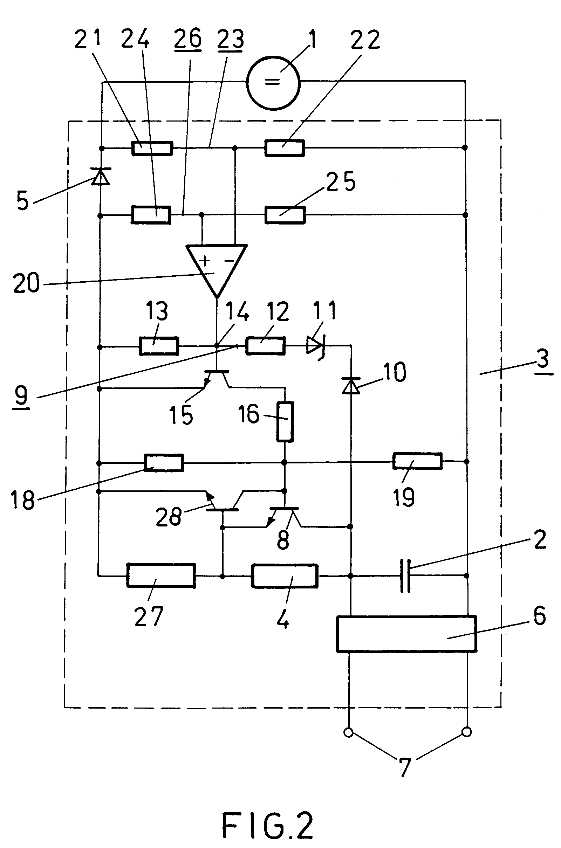

Nachfolgend wird die Erfindung anhand eines in der Zeichnung dargestellten Ausführungsbeispiels näher erläutert. Hierbei zeigen die beiden Figuren 1 und 2 Blockschaltbilder zweier Ausführungsformen der Strombegrenzungsvorrichtung nach der Erfindung, bei denen der von einer Speisequelle gelieferte Eingangsstrom eines einen Speicherkondensator aufweisenden Speisegerätes begrenzt werden soll.

### WEG ZUR AUSFÜHRUNG DER ERFINDUNG

In beiden Figuren bezeichnet 1 eine als Gleich- oder Wechselstromnetz bzw. als Batterie ausgebildete Speisequelle, deren einer Pol unmittelbar mit einem ersten Anschluss eines Speicherkondensators 2 - oder gegebenenfalls weiterer Speicherkondensatoren - eines Speisegerätes 3 verbunden ist. Der andere Anschluss des Speicherkondensators 2 ist mit einem ohmschen Widerstand 4 verbunden, welcher seinerseits über eine Diode 5 mit dem anderen Pol der Speisequelle 1 in Wirkverbindung steht. 6 bezeichnet das Aktivteil des Speisegerätes 3, in dem die an den Speicherkondensator 2 geführte Eingangsspannung des Speisegerätes stabilisiert und anschliessend an den Ausgang 7 des Speisegerätes 3 geführt wird. Parallel zum Widerstand 4 sind ein vorzugsweise als Transistor 8 oder Thyristor ausgeführtes Schaltelement gelegt, sowie ein Strompfad 9, in dem zwei gegenläufig zueinander angeordnete Dioden 10, 11, von denen die eine als Zenerdiode 11 ausgebildet ist, sowie zwei Widerstände 12, 13 miteinander in Serie geschaltet sind. Ein zwischen den beiden Widerständen 12, 13 gelegener Verbindungspunkt 14 ist mit der Basis eines Transistors 15 verbunden, dessen Kollektor-Emitter-Strecke über einen ohmschen Widerstand 16 verbunden ist mit der Basis des Transistors 8 und einem Verbindungspunkt 17 zweier miteinander in Serie geschalteter und jeweils grösser als der Widerstand 16 bemessener ohmscher Widerstände 18, 19. Diese Widerstände 18, 19 sind parallel zum Speicherkondensator 2 und dem Widerstand 4 geschaltet. An den Verbindungspunkt 14 ist der Ausgang eines Spannungsvergleichers 20 geführt, an dessen einen Eingang das Ausgangssignal eines von ohmschen Widerständen 21, 22 gebildeten Spannungssensors 23 geführt ist, während an dessen anderen Eingang das Ausgangssignal eines von ohmschen Widerständen 24, 25 gebildeten Spannungssensors 26 anliegt.

Die Wirkungsweise der Vorrichtung gemäss Fig. 1 ist wie folgt:
Bei Inbetriebnahme des Speisegerätes 3 ist der Transistor 8 geöffnet und wird zunächst der Speicherkondensator 2 aufgeladen. Dies hat einen Eingangsstrom zur Folge, welcher überwiegend in einem von der Speisequelle 1 dem Speicherkondensator 2, dem ohmschen Widerstand 4 und der Diode 5 gebildeten Ladekreis fliesst. Hierbei begrenzt der Widerstand 4 die Höhe des Eingangsstromes, wodurch unerwünschte Stromspitzen vermieden werden. Der mit dem Eingangsstrom verbundene Spannungsabfall am Widerstand 4 ist grösser als die Zenerspannung der Zenerdiode 11. Daher wird auch im Strompfad 9 ein - wenn auch kleiner - Strom geführt, welcher vom Verbindungspunkt zwischen Speicherkondensator 2 und Widerstand 4 über die Diode 10, die in Sperrichtung betriebene Zenerdiode 11 und die ohmschen Widerstände 12, 13 zum Verbindungspunkt zwischen Widerstand 4 und Diode 5 geführt wird. Das hierbei am Verbindungspunkt 14 auftretende Spannungssignal hält den Transistor 15 geschlossen. Das am Verbindungspunkt 17 anstehende Spannungssignal ist daher klein. Der Transistor 8 bleibt geöffnet. Sobald der zur Ladung des Speicherkondensators 2 verwendete Eingangsstrom und damit die Spannung über dem Widerstand 4 unter einen vorgegebenen Wert abgefallen sind, sperrt die Zenerdiode 11. Das Spannungssignal am Verbindungspunkt 14 verschwindet nun, so dass der Transistor 15 geöffnet wird. Am Verbindungspunkt 17 steht nun ein grosses Spannungssignal an, welches das Schliessen des Transistors 8 und damit eine Ueberbrückung des Widerstandes 4 bewirkt. Der bei nachfolgendem Betrieb des Speisegerätes verwendete Eingangsstrom fliesst daher in der Folge lediglich in einem von Speisequelle 1, Speicherkondensator 2, Transistor 8 und Diode 5 gebildeten, weitgehend verlustfreien Stromkreis.

Fällt nun während des Betriebes des Speisegerätes 3 die Spannung der Speisequelle 1 gegenüber der Spannung am Speicherkondensator 2 weg, so gibt der Speicherkondensator 2 durch elektrische Entladung kurzzeitig Energie in das Speisegerät 3 ab. Um zu verhindern, dass bei Wiederkehr der Spannung der Speisequelle 1 grosse Eingangsströme auftreten können, muss bereits bei Absinken der Spannung der Speisequelle 1 der Widerstand 4 durch Oeffnen des Transistors 8 in den Ladekreis für den Speicherkondensator 2 eingeschaltet sein. Dies wird durch die Spannungssensoren 23 und 26 erreicht. Mit dem parallel zur Speisequelle 1 geschalteten Spannungssensor 23 wird dem Spannungsvergleicher 20 ein der Speisequelle 1 und damit der Eingangsspannung des Speisegerätes 3 entsprechendes Spannungssignal zugeführt. Dieses Signal wird mit einem vom Spannungssensor 26 ermittelten und der Speicherkondensatorspannung entsprechenden Signal verglichen. Das vom Spannungssensor 23 ermittelte Signal steigt gegenüber dem vom Spannungssensor 26 ermittelten Signal erheblich an, sobald die Spannung der Speisequelle 1 stark abfällt. Dies ist dadurch bedingt, dass der Speicherkondensator 2 nun das Bezugspotential für die Spannungssensoren 23, 26 bildet und die Diode 5 den Spannungssensor 23 und den Speicherkondensator 2 entkoppelt. Durch ein vom Spannungsvergleicher 20 abgegebenes Signal wird der Transistor 15 geschlossen und somit durch Herabsetzung der am Verbindungspunkt 17 anstehenden Spannung der Transistor 8 geöffnet. Der Widerstand 4 kann nun bei Wiederkehr der Spannung der Speisequelle 1 auftretende Stromstösse wirksam begrenzen.

Die gemäss Fig 2 ausgebildete Strombegrenzungsvorrichtung nach der Erfindung weist gegenüber der zuvor beschriebenen Ausführungsform zusätzlich einen Widerstand 27 und einen Transistor 28 auf. Der Widerstand 27 ist in Serie mit dem Widerstand 4 und dem Transistor 8 zwischen die Diode 5 und einen Verbindungspunkt von Widerstand 4 und Transistor 8 in den Ladekreis gechaltet. Die Basis des Transistors 28 ist mit dem Emitter des Transistors 8 und einen der beiden Anschlüsse des Widerstandes 27 verbunden, wohingegen der Emitter des Transistors 28 mit dem anderen der beiden Anschlüsse des Widerstandes 27 und der Kollektor des Transistors 28 mit der Basis des Transistors 8 verbunden sind. Ueberschreitet bei dieser Ausführungsform der erfindungsgemässen Strombegrenzungsvorrichtung der durch den Widerstand 27 geführte Eingangsstrom eine vorgegebene Grösse oder wirkt im Ladekreis eine etwa in der Speisequelle 1 erzeugte transiente Ueberspannung, so tritt am Transistor 28 eine Basis-EmitterVorspannung auf, die einen Kollektorstrom und damit ein Sperren des Transistors 8 verursacht. Hierdurch wird der Transistor 8 in besonders wirkungsvoller Weise vor grossen Strömen und Ueberspannungen geschützt.

## Patentansprüche

1. Vorrichtung zur Begrenzung des von einer Speisequelle (1) gelieferten Eingangsstromes eines mindestens einen Speicherkondensator (2) aufweisenden Speisegerätes (3), bei der in Serie zum mindestens einen Speicherkondensator (2) und zur Speisequelle (1) mindestens ein Widerstand (4) geschaltet ist, und bei der parallel zum mindestens einen Widerstand (4) mindestens ein Schaltelement liegt, welches unterhalb eines vorgegebenen Wertes des durch den mindestens einen Widerstand (4) fliessenden Eingangsstromes geschlossen und unterhalb eines vorgegebenen Wertes der von der Speisequelle (1) gelieferten Eingangsspannung geöffnet wird, dadurch gekennzeichnet, dass zwischen dem mindestens einen Widerstand (4) und der Speisequelle (1) mindestens eine Diode (5) angeordnet ist, und dass zwei durch die mindestens eine Diode (5) voneinander entkoppelte und über einen Spannungsvergleicher (20) auf das mindestens eine Schaltelement wirkende Spannungssensoren (23, 26) vorgesehen sind, von denen ein erster (23) parallel zur Speisequelle (1) und ein zweiter (26) parallel zum mindestens einen Speicherkondensator (2) geschaltet ist.

2. Vorrichtung nach Anspruch 1, dadurch gekennzeichnet, dass parallel zum mindestens einen Widerstand ein unterhalb des vorgebenen Wertes des Eingangsstromes gesperrter und auf das mindestens eine Schaltelement wirkender Strompfad gelegt ist.

3. Vorrichtung nach Anspruch 2, dadurch gekennzeichnet, dass der Strompfad (9) eine Zenerdiode (11) enthält.

4. Vorrichtung nach einem der Ansprüche 1 bis 3, dadurch gekennzeichnet, dass das mindestens eine Schaltelement ein erster Transistor (8) ist, dass in Serie mit dem mindestens einen Widerstand (4) und dem ersten Transistor (8) ein weiterer Widerstand (27) geschaltet ist, und dass ein zweiter Transistor (28) vorgesehen ist, dessen Basis mit dem Emitter des ersten Transistors (8) und einem der beiden Anschlüsse des weiteren Widerstandes (27), dessen Emitter mit dem anderen der beiden Anschlüsse des weiteren Widerstandes (27) und dessen Kollektor mit der Basis des ersten Transistors (8) verbunden ist.

## Claims

1. Device for limiting the input current of a supply unit (3) delivered from a supply source (1), said supply unit having at least one storage capacitor (2), in which device at least one resistor (4) is connected in series with at least one storage capacitor (2) and the supply source (1), and in which device at least one switching element lies parallel to the at least one resistor (4), which switching element is closed below a given value of the input current flowing through the at least one resistor (4) and is opened below a given value of the input voltage delivered by the supply source (1), characterized in that at least one diode (5) is arranged between the at least one resistor (4) and the supply source (1), and in that there are provided two voltage sensors (23, 26), which are isolated from each other by the at least one diode (5) and act via a voltage comparator (20) on the at least one switching element and of which a first sensor (23) is connected parallel to the supply source (1) and a second sensor (26) is connected parallel to the at least one storage capacitor (2).

2. Device according to Claim 1, characterized in that a current path which is blocked below the given value of the input current and acts on the at least one switching element is laid parallel to the at least one resistor.

3. Device according to Claim 2, characterized in that the current path (9) contains a zener diode (11).

4. Device according to one of Claims 1 to 3, characterized in that the at least one switching element is a first transistor (8), in that there is connected in series with the at least one resistor (4) and the first transistor (8) a further resistor (27), and in that there is provided a second transistor (28), the base of which is connected to the emitter of the first transistor (8) and to one of the two terminals of the further resistor (27), the emitter of which second transistor is connected to the other of the two terminals of the further resistor (27) and the collector of which second transistor is connected to the base of the first transistor (8).

## Revendications

1. Dispositif pour limiter le courant d'entrée, fourni par une source d'alimentation (1), d'un appareil d'alimentation (3) comportant au moins un condensateur de stockage (2), dans lequel au moins une résistance (4) est connectée en série avec ledit au moins un condensateur de stockage (2) et avec la source d'alimentation (1), et dans lequel au moins un élément de commutation est connecté en paralléle avec au moins une résistance (4), cet élément de commutation étant fermé en dessous d'une valeur prédéterminée du courant d'entrée traversant ladite au moins une résistance (4) et étant ouvert en dessous d'une valeur prédéterminée de la tension d'entrée fournie par la source d'alimentation (1), caractérisé en ce qu'entre ladite au moins une résistance (4) et la source d'alimentation (1) est installée au moins une diode (5), et que deux capteurs de tension (23, 26) découples l'un de l'autre par ladite au moins une diode (5) et agissant sur ledit au moins un élément de commutation via un comparateur de tension (20) sont prévus, le premier capteur de tension (23) étant connecté en parallèle à la source d'alimentation (1) et le second capteur de tension (26) étant connecté en parallèle audit au moins un condensateur de stockage (2).

2. Dispositif suivant la revendication 1, caractérisé en ce qu'un trajet de courant bloqué en dessous de la valeur prédéterminée du courant d'entrée et agissant sur ledit au moins un élément de commutation est prévu en parallèle à ladite au moins une résistance.

3. Dispositif suivant la revendication 2, caractérisé en ce que le trajet de courant (9) contient une diode Zener (11).

4. Dispositif suivant l'une des revendications 1 à 3, caractérisé en ce que ledit au moins un élément de commutation est un premier transistor (8), qu'une autre résistance (27) est connectée en série avec ladite au moins une résistance (4) et le premier transistor (8), et qu'un second transistor (28) est prévu, dont la base est connectée à l'émetteur du premier transistor (8) et à une des deux bornes de l'autre résistance (27), dont l'émetteur est connecté à l'autre des deux bornes de l'autre résistance (27) et dont le collecteur est connecté à la base du premier transistor (8).
